# NEW EUROPEAN PATENT SPECIFICATION

(11) **EP 1 807 280 B2**
(45) Date of publication and mention of the opposition decision: **22.04.2020**
(45) Mention of the grant of the patent: 08.06.2011
(21) Application number: 05804236.7
(22) Date of filing: 03.11.2005
(51) Int. Cl.: B60K 15/04

(54) **ANTI SIPHON TANK INLET AND METHOD**
ANTISAUG-TANKEINLASS UND VERFAHREN DAFÜR
ENTREE DE RESERVOIR ANTISIPHON ET PROCEDE

(30) Priority: 03.11.2004 GB 0424338
(43) Date of publication of application: 18.07.2007
(73) Proprietor: Tiss Limited, Blackpool, Lancashire FY4 1DW (GB)
(72) Inventor: WHOLEY, Brian, Blackpool, Lancashire FY4 1DW (GB)
(74) Representative: Kenrick, Mark Lloyd
(86) International application number: PCT/GB2005/004259
(87) International publication number: WO 2006/048659

(56) References cited:
- US-A- 1 512 065
- US-A- 1 931 335
- US-A- 2 145 759
- US-A- 3 951 297
- US-A- 4 718 568
- US-B1- 6 508 275

## Description

The present invention relates to inlets for fluid tanks such as a vehicle fuel tank. Particularly, but not exclusively the present invention relates to anti-siphon inlet for vehicle fuel tanks.

The theft of fuel by siphoning from the fuel tanks of vehicles, and in particular commercial road vehicles, is a recognised problem. It is conventional to fit vehicles with a lockable fuel tank filler cap to prevent unauthorised access to the tank inlet. However, since the fuel filler cap is accessible it is vulnerable to tampering and can often be forced open by the determined thief. In addition, it is not always practical to fit a vehicle with a lockable fuel filler cap.

This problem has been addressed in the prior art by provision of a fluid tank inlet pipe incorporating a float valve to prevent fuel being drawn off by siphoning from the tank inlet.

For example, French patent FR 2 534 888 discloses a fuel tank inlet pipe assembly provided with a float valve at its inner end. The float valve comprises a ball float retained in an apertured float chamber and which sits against a valve seat defined at the end of the inlet pipe when the fuel level in the tank is above the end of the inlet pipe to thereby prevent fuel flow back through the pipe. A grill is fitted in the inlet pipe a short distance above the valve seat to prevent a siphon tube being used to force the ball valve away from its seat. The grill itself is protected by a gentle S bend in the inlet pipe which prevents insertion of a rigid tool to penetrate the grill. A would be thief would only be able to remove any fuel present in the inlet pipe above the level of the grill.

US Patent US 1 995 007 discloses an anti-siphon inlet assembly comprising an inlet pipe provided with a baffle plate within its inlet portion and a float valve in the disposed in the pipe below the baffle plate. Examples of anti-siphon fuel tank inlet assemblies provided with baffles to prevent insertion of a siphon tube, but which do not have a float valve, are disclosed in US patent numbers 2,145,759 and 3,951,297.

The applicant has now recognised that it is desirable to provide an inlet assembly which can be easily fitted to an existing fluid tank inlet aperture. However, it may be appreciated that in order for such an inlet assembly to provide an effective means for preventing theft it is essential that the assembly can be securely attached to the tank inlet aperture to prevent its easy removal. Thus the need for secure attachment must be balanced with the ease and simplicity of installing the inlet in place of an exiting inlet.

For example, the fuel inlet pipe disclosed in French patent FR 2 534 888 appears to be either welded or brazed into position by a fillet around the neck of the tank aperture and in US patent US1 995 007 the inlet pipe is provided with an exterior flange midway along its length for attachment to the tank. Although these arrangements provide a secure attachment they do not allow for ease of attachment and are, therefore, not ideal for an assembly to be fitted to an existing tank.

The anti-siphon inlet assembly as disclosed in US patent numbers 2,145,759 and 3,951,297 are more readily fitted to a tank inlet neck, but in each case the inlet assembly is designed to fit to a specific tank inlet neck size and configuration. For instance, the inlet assembly of US 3,951,297 comprises a tubular member depending from a tank inlet extension 22 which is provided with an internal screw thread for screwing on to a similarly threaded tank inlet (and may then be bonded or welded to the inlet to prevent removal). US 2,145,759 on the other hand discloses an inlet assembly comprising a tubular body having lugs which are designed to interlock with an appropriately configured tank inlet neck provided with an internal flange defining locking tongs which engage with the lugs.

It is an object of the present invention to obviate or mitigate the above problems.

According to the present invention there is provided a method of:
fitting an anti-siphon inlet assembly to a fluid tank inlet having an extending neck;
the inlet assembly comprising a generally tubular body having an inlet aperture at a first end and depending from a mounting means located at or adjacent said first end;
one or more apertures remote from said first end to allow the passage of fluid through the tubular body into said tank;
means disposed within said tubular body to block the passage of a siphon tube through said tubular body;
wherein the mounting means comprises at least one skirt spaced from a portion of the tubular member to define a gap therebetween which is open to receive the neck of the tank inlet;
the method comprising:
passing the tubular body in to said tank inlet so that the tank inlet neck is slidably received within the or each gap such that at least a portion of said at least one skirt overlaps at least a portion of the inlet neck, and
securing the or each skirt to the inlet neck.

The present invention thus provides a method of fitting a fuel tank inlet assembly (configured in accordance with the present invention) to the neck of a vehicle fuel tank inlet which is relatively straight forward to perform, provides good security against unauthorised removal, and is not limited to one particular size or configuration of inlet neck. The latter feature is significant in that a single installation method, and inlet assembly, can be fitted to a range of differently sized and configured fluid tank inlet necks. It will for instance be appreciated that the types of fluid tanks which require protection from siphoning come in a variety of sizes and configurations. For example, vehicle fuel tanks, although often standardised for a particular range of vehicles, can vary dependent upon the manufacturer, size and particular model of the vehicle that the fuel tank is fitted to. However, the fuel tank will generally have an inlet with an extending neck portion designed to receive a cap. The method of fitting an anti-siphon inlet assembly according to the present invention is independent of any particular inlet neck configuration. Moreover, with appropriate dimensioning a single inlet assembly can be configured to accept a range of inlet neck sizes. Accordingly, the present invention provides a method of fitting an anti-siphon inlet assembly to a fuel tank which is wider in application than the prior art anti-siphon inlet assemblies and installation methods discussed above.

The mounting means could for instance comprise a plurality of skirts circumferentially spaced around the tubular member, for instance three or four skirts spaced at 120° or 90° angles around the circumference. Each skirt could effectively define a "tab" which can be secured to the inlet neck by riveting etc. However, it is preferable that there is a single annular skirt surrounding the tubular member so that the gap receiving the inlet neck is an annular recess.

The anti-siphon inlet assembly according to the present invention comprises:
a fluid tank inlet assembly adapted for fitting to a tubular neck of a fluid tank inlet, the inlet assembly comprising:
a generally tubular body having an inlet aperture at a first end and depending from a mounting means located at or adjacent said first end;
one or more apertures remote from said first end to allow the passage of fluid through the tubular body into said tank; and
means disposed within said tubular body to block the passage of a siphon tube through said tubular body, wherein
the mounting means comprises at least one skirt spaced from a portion of said tubular body, a gap being defined between said portion of tubular body and said at least one skirt, the or each gap having an open end for slidably receiving a portion of the neck of a tank inlet, the or each gap having a radial width and a length extending from said open end to receive a neck portion of the same length, wherein said portion of the tubular body has an enlarged radial thickness relative to the radial thickness of at least the majority of the tubular body depending therefrom and a greater outer diameter than at least the majority of the tubular body depending therefrom and the or each gap has a radial width sufficient to accommodate a range of different diameter tank inlet necks.

Optionally the length of the or each gap is not less than half its radial width.

This ensures that the skirt (which is preferably annular) will overlap the top of the inlet tank neck to a degree sufficient to enable secure attachment between the two in the method according to the present invention. For instance, the inlet assembly disclosed in US 3,951,297 mentioned above has an annular skirt intended to sit around the very top portion of the inlet neck, the skirt defining a recess the length of which is limited by a sealing gasket so that only a very small portion of the inlet neck is received within the recess. This portion is not sufficient for instance to enable secure attachment using rivets or similar fasteners, nor does it provide sufficient contact area between the neck and the skirt to enable secure bonding between the two.

Such embodiments of the inlet assembly are particularly suitable for fitting to tank inlet necks of a relatively large diameter, the enlarged portion of the tubular member ensuring that the radial width of the gap (which is preferably an annular recess defined by an annular skirt) is not so great as to present a problem in centering the inlet assembly within the inlet neck, whilst on the other hand ensuring that the internal diameter of the tubular body is no greater than necessary to accommodate a standard fuel pump nozzle (which is desirable to prevent backflow of fuel past the nozzle when filling the fuel tank). In addition, the enlarged portion reinforces the tubular member in the region of its attachment to the inlet neck.

Preferably, at least one vent aperture is provided in the inlet pipe adjacent to the collar which, in use, communicates with the inlet of the fluid tank. The vent aperture is provided to allow the gas to escape as the fuel level rises during filling of the fluid tank. Preferably a plurality of vent apertures are provided, for example, spaced circumferentially around the inlet pipe.

Preferably the fluid tank inlet assembly further comprises a cap engagement means at its proximal end. Most preferably the cap engagement means is arranged to receive the same cap as the fluid tank inlet aperture. Thus, upon installation of the fluid tank inlet assembly the original fluid tank cap may continue to be used.

In one preferred embodiment the means to permit the flow of fluid into the tank but block the passage of a siphon tube comprises a valve means disposed at the distal end of the inlet pipe to allow fluid flow from the distal end of the inlet pipe but to prevent return flow through the inlet pipe. The valve means may preferably be a float valve comprising a float trapped in an apertured float chamber which cooperates with, a valve seat defined adjacent the distal end of the inlet pipe.

Preferably, the float valve chamber is generally cylindrical and comprises a plurality of fluid flow slots arranged axially relative to the inlet pipe. The float may preferably be a ball float.

Preferably, the float valve is secured to the end of the inlet pipe by a screw thread connection. In a preferred embodiment the float chamber has an axial length no less than half the axial length of the inlet pipe.

Alternatively or additionally the means to permit the flow of fluid into the tank but block the passage of a siphon tube comprises a baffle disposed within the inlet pipe.

As mentioned above, in an arrangement having a valve it is advantageous to provide a baffle between the proximal end and the valve to prevent the valve being forced open mechanically.

In some embodiments, however, it is preferred to provide a baffle but not a valve. Such arrangements are greatly simplified. It will be appreciated that such an arrangement would not prevent siphoning of fluid from above the distal end of the inlet assembly. However, the applicants have recognised that many commercial road vehicle users routinely only ever partially fill their vehicles' fuel tanks and therefore the provision of a valve is unnecessary.

Other preferred features of the invention will become apparent from the description below.

Specific embodiments of the present invention will now be described, by way of example only, with reference to the accompanying drawings, in which:
Figure 1 illustrates schematically an embodiment of the present invention with a float valve;
Figure 2 schematically illustrates an embodiment of the present invention without a float valve;
Figure 3 is a cut away cross sectional view of the mounting arrangement of the embodiments of Figures 1 and 2; and
Figure 4 illustrates a modification of the mounting method described in relation to Figure 3.

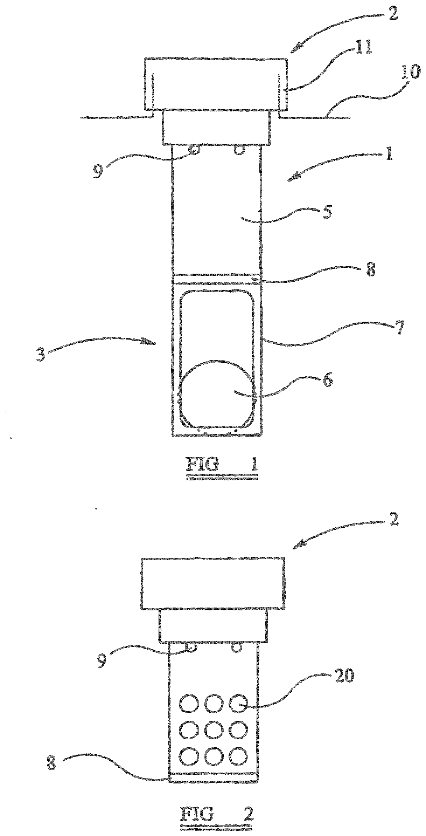

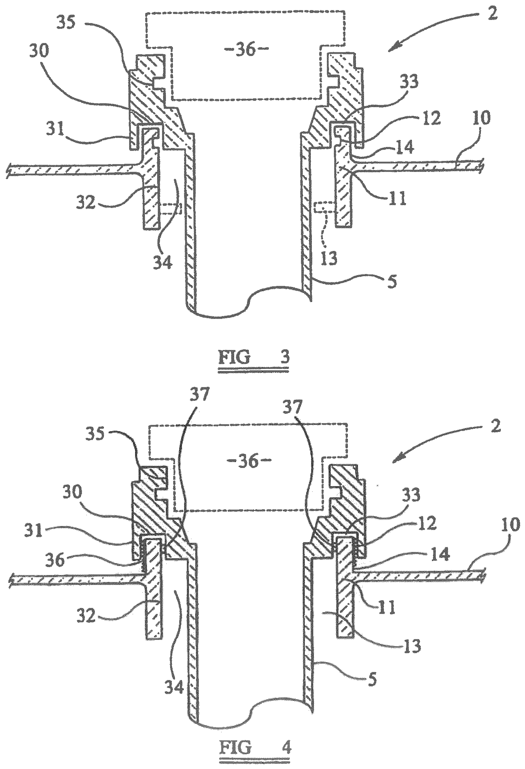

With reference to figures 1 and 2, a fluid inlet assembly 1 for fitting to a fluid tank 10 comprises a substantially straight body 5, an attachment means 2 at its proximal end and means 3 to permit the flow of liquid into the tank but block the passage of a siphon tube (the "anti-siphon means") at its distal end. The attachment means 2 according to the present invention is discussed in more detail further below with reference to figure 3.

The body 5 and anti-siphon means 3 of the assembly are similar to that disclosed in the applicants co-pending application GB 0 322 594. The attachment means 2, which is provided for attaching the assembly to the inlet aperture 11 of the fuel tank 10, is a novel feature of the present invention and is described in detail below.

In the embodiment of figure 1, the anti-siphon means 3 includes a float valve comprising a float ball 6 held within a float cage 7. The float ball is a spherical hollow plastics ball. Thus, the float valve is arranged to allow the float ball 6 to be movable along the longitudinal axis of the assembly from a first, open, position (as shown in figure 1) to a second, closed position when fuel rises above the distal end of the assembly. In the illustrated embodiment the float valve is manufactured separately from the body 5 of the assembly and is attached by means of a screw thread to the distal end of the body.

It will be appreciated that when the float valve is closed it is still possible to fill the tank with further fuel as the fuel pressure entering the tank opens the valve against its buoyancy.

A baffle plate 8 is provided within the body 5, towards its distal end. The baffle plate comprises a metal plate, provided with a plurality of fuel outlet holes, which is securely attached across the body. The baffle plate 8 protects the float valve and further prevents siphoning when the fuel level is below the level required to close the valve.

The body 5 is provided with a plurality of vent outlets 9 spaced around its circumference adjacent to the attachment means 2. These vents assist the filling of the tank by allowing gas to escape the tank as it is displaced by fuel.

An alternative embodiment of the invention, as shown in figure 2, comprises an anti-siphon assembly as described above but is not provided with a float valve.

This embodiment is intended for use where a tank is generally only filled to a level below the distal end of the assembly. Thus, only a baffle plate 8 is required. The applicant has found that a number of commercial vehicle operators routinely only partially fill their vehicles tanks. This reduces the amount of capital held in fuel at any given time. Such a policy is especially advantageous for companies with large fleets of vehicles which are used for short to medium range transit. Although the amount of fuel held is reduced it is still desirable to protect the fuel from theft.

The body 5 in this embodiment is further provided with a plurality of inlet holes 20 which are advantageous in reducing the tendency of fuel welling up within the assembly during filing. This is undesirable as it can result in either spilling out of the inlet or causing the dispensing nozzle to shut off (most fuel dispensers are designed to shut off when the fluid level reaches the end of the dispensing nozzle).

With reference to figure 3, the attachment means 2 of a preferred embodiment will now be described in detail.

The attachment means 2 provided at the proximal end of the inlet body 5 comprises a mounting flange 30 which extends in the radial direction of the assembly. A depending skirt 31 is provided which extends down from the outer edge of the flange 30 in the longitudinal direction of the inlet pipe. The tubular body 5 has a region of increased thickness, i.e. collar 32, adjacent to the skirt 31 such that the flange, skirt and collar define an annular recess 33 extending around the outside circumference of the body 5. The annular recess 33 defines a mounting seat arranged to be located over the neck 14 of the tank inlet aperture 11 which includes cap engagement means 12 in the form of a recess formed in the neck of the inlet forming part of a bayonet fitting.

The assembly is attached to the inlet aperture 11 by bonding the mounting seat 33 over the neck 14 of the aperture 11. The depending skirt 31 and neck 14 are then drilled and riveted together for additional security.

The collar 32 extends only a limited distance along the body 5 to allow sufficient clearance for any internal rim 13 which may be provided on the tank inlet aperture. The collar 32 is provided so that the tubular body is a reasonably snug fit with the inlet neck to help in centralising the inlet assembly in the tank inlet whilst avoiding a tubular body with an undesirably large internal diameter. That is, it is preferable that the internal diameter of the tubular body is a minimum required to accommodate a fuel filling nozzle to avoid backflow of fuel past the nozzle when filling the tank. Provision of the collar 32 is for instance useful for embodiments of the invention designed for fitting to fuel tank inlet necks of the diameter in the region of 80mm. The collar 32 would not, for example, be necessary for embodiments of the invention intended for fitting to substantially smaller inlet neck diameters, for instance of the order of 60mm.

It will be appreciated that the inlet assembly illustrated in Figures 1 to 3 can be fitted to any inlet neck that can be received within the recess 33. Accordingly, a single inlet assembly can accommodate inlet necks of a range of sizes. For example, in one particular embodiment the collar 32 has an outside diameter of 77.5mm and the depending skirt has an inside diameter of 107.8mm to provide a mounting seat 33 suitable for tank inlet apertures having a neck with a typical interior diameter of 78-80mm and a typical outside diameter of 104-106.5mm. The depending skirt extends 15.8mm from the lower surface of the mounting flange to provide sufficient area for attaching the assembly to the fuel tank and allowing the assembly to be attached to tanks 10 having a neck 14 of varying sizes. Typically the applicant has found that the neck depth on commercial vehicle fuel tanks varies from 25-50mm. The collar reinforces the inlet assembly in the region of its attachment to the inlet, but is limited to extend less than 37mm from the lower surface of the rim to allow for a typical internal rim location.

The uppermost end of the inlet assembly 1 is provided with a cap engagement means 35. The illustrated engagement means is a bayonet type fitting but other fitting types can be provided as known in the art. The engagement means is arranged so as to allow the original fuel tank cap 36, which prior to fitting of the inlet assembly 1 would be received by engagement means 12, to close the inlet assembly.

In the above description, and in Figures 1 to 3, the inlet assembly according to the present invention is fitted to a fluid tank inlet neck which has a bayonet type fitting to receive a fuel cap. The same embodiment of the invention can similarly be fitted to fuel tank inlet necks having other configurations, including for instance a neck provided with an external, or internal, screw thread to receive a correspondingly screw threaded cap. The existence of the screw thread will have no impact on the method of fitting the inlet assembly according to the invention. However, in such cases it may be desirable to provide an inlet assembly with a screw threaded surface to receive a cap of the same configuration as would be fitted to the unmodified inlet neck (as an alternative to the bayonet fitting 35 described above).

As mentioned above, the preferred method of securing the inlet assembly to the tank inlet neck is to first bond the skirt to the inlet neck and then to rivet the skirt to the inlet neck. The bonding step may provide in some cases initial securement of the inlet assembly for the subsequent riveting operation, but also provides a fluid tight seal to prevent fluid leaking out of the inlet through the annular recess. The riveting step then provides further security against unauthorised removal. In other cases the riveting may be performer before the adhesive used to bond the skirt to the tubular body has dried or set, in which case the rivets secure the inlet in position whilst the adhesive hardens.

It will be appreciated that alternative fasteners could be used to secure the inlet assembly to the tank inlet neck. For instance, grub screws could be used. In this case appropriate holes would need to be drilled through the inlet assembly skirt, but not through the inlet tank neck. This may be advantageous in some applications, although provides less security against removal than riveting.

As an alternative to the use of bonding to provide a seal between the inlet assembly and the inlet neck, an o-ring or similar annular seal member could be located around the tubular body within the recess, to be received between the tubular body and an internal annular surface of the tank inlet neck. This is illustrated schematically in Figure 4, which shows the inlet assembly of Figures 1 to 3 installed within a screw threaded tank inlet neck 36, with an O-ring 37 located around the collar 32 so as to seal the annular gap between the tubular body of the insert assembly and the inlet neck 36. The skirt 31 can then be secured to the neck by riveting, or using other fasteners such as grub-screws etc. Although not necessary, if desired the skirt 31 could also be bonded to the neck 36.

As another modification to the installation procedure, the skirt 31 could be welded to the inlet neck. This is not preferred, but nevertheless is a possibility contemplated by the present invention.

Other possible modifications will be readily apparent to the skilled person.

## Claims

1. A method of:
fitting an anti-siphon inlet assembly (1) to a fluid tank inlet (13) having an extending neck (14);
the inlet assembly comprising a generally tubular body (5) having an inlet aperture at a first end and depending from a mounting means (2) located at or adjacent said first end;
one or more apertures (7;20) remote from said first end to allow the passage of fluid through the tubular body (5) into said tank;
means (8) disposed within said tubular body (5) to block the passage of a siphon tube through said tubular body (5);
wherein the mounting means (2) comprises at least one skirt (31) spaced from a portion (32) of the tubular member (5) to define a gap (33) therebetween which is open to receive the neck (14) of the tank inlet;
the method comprising:
passing the tubular body (5) in to said tank inlet so that the tank inlet (13) neck (14) is slidably received within the or each gap (33) such that at least a portion of said at least one skirt (31) overlaps at least a portion of the inlet neck (14), and
securing the or each skirt (31) to the inlet neck (14).

2. The method according to claim 1, wherein said at least one skirt (31) comprises an annular skirt (31) and said gap (33) is an annular recess (33) defined around said portion (32) of the tubular body (5).

3. The method of claim 2, wherein securing the annular skirt (31) to the inlet neck (14) comprises bonding the skirt (31) to the inlet neck (14) around the circumference of the skirt (31).

4. The method according to claim 2 or claim 3, wherein securing the annular skirt (31) to the inlet neck (14) comprises welding the skirt (31) to the inlet neck around the circumference of the skirt (31).

5. The method of any preceding claim, wherein securing said at least one skirt (31) to the inlet neck (14) comprises fastening the or each skirt (31) to the inlet neck (14) using fasteners such as rivets, screws or the like.

6. The method according to claim 3, further comprising the step of riveting the annular skirt (31) to the inlet neck (14) subsequent to said bonding.

7. The method according to any preceding claim, wherein an annular seal member (37) is located around said portion (32) of the tubular body (5) so that said tank inlet neck (14) is slidably received over said seal member (37) so that the seal member (37) provides a fluid seal between the inlet neck (14) and the tubular body (5).

8. A fluid tank inlet assembly adapted for fitting to a tubular neck (14) of a fluid tank inlet (13), the inlet assembly comprising:
a generally tubular body (5) having an inlet aperture at a first end and depending from a mounting means (2) located at or adjacent said first end;
one or more apertures (7;20) remote from said first end to allow the passage of fluid through the tubular body (5) into said tank; and
means (8) disposed within said tubular body (5) to block the passage of a siphon tube through said tubular body (5); wherein,
the mounting means (2) comprises at least one skirt (31) spaced from a portion (32) of said tubular body (5), a gap (33) being defined between said portion (32) of the tubular body (5) and said at least one skirt (31), the or each gap (33) having an open end for slidably receiving a portion of the neck (14) of a tank inlet, the or each gap (33) having a radial width and a length extending from said open end to receive a neck portion of the same length;
**characterised in that** said portion of the tubular body has an enlarged radial thickness relative to a radial thickness of at least the majority of the tubular body depending therefrom and a greater outer diameter than at least the majority of the tubular body depending therefrom; and
the or each gap (33) has a radial width sufficient to accommodate a range of different diameter tank inlet necks.

9. A fluid tank inlet assembly according to claim 8, wherein said at least one skirt (31) comprises an annular skirt (31) surrounding said portion of the tubular body (5), and said gap (33) comprises an annular recess (33) defined between said portion of the tubular body (5) and the annular skirt (31).

10. A fluid tank inlet assembly according to claim 9, wherein the annular skirt depends from an annular flange extending radially from the tubular body, a surface of the annular flange defining an end of the annular recess opposing said open end.

11. A fluid tank inlet assembly according to any one of claims 8 to 10, further comprising an annular seal member (37) disposed around said portion (32) of the tubular body (5), such that the width of the or each gap (33) is defined between said at least one skirt (31) and said seal member (37).

12. A fluid tank inlet assembly according to anyone of claims 8 to 11, wherein said first end of the tubular inlet is provided with fuel cap engagement means (35).

## Patentansprüche

1. Verfahren für:
das Anbringen einer Absaugschutz-Einlassbaugruppe (1) an einem Fluidtankeinlass (13), der einen sich erweiternden Hals (14) aufweist,
wobei die Einlassbaugruppe einen im Allgemeinen röhrenförmigen Körper (5) umfasst, der eine Einlassöffnung an einem ersten Ende aufweist und von einem Anbringungsmittel (2) abhängt, das an oder benachbart zu dem ersten Ende angeordnet ist,
eine oder mehrere Öffnungen (7; 20) entfernt von dem ersten Ende, um den Durchgang eines Fluids durch den röhrenförmigen Körper (5) in den Tank zu ermöglichen,
Mittel (8), die innerhalb des röhrenförmigen Körpers (5) angeordnet sind, um den Durchgang einer Absaugröhre durch den röhrenförmigen Körper (5) zu sperren,
wobei das Anbringungsmittel (2) mindestens einen Saum (31) umfasst, der mit Abstand von einem Abschnitt (32) des röhrenförmigen Elements (5) angeordnet ist, um einen Spalt (33) zwischen denselben zu definieren, der offen ist, um den Hals (14) des Tankeinlasses aufzunehmen,
wobei das Verfahren Folgendes umfasst:
das Führen des röhrenförmigen Körpers (5) in den Tankeinlass, so dass der Hals (14) des Tankeinlasses (13) verschiebbar innerhalb des oder jedes Spalts (33) aufgenommen wird derart, dass mindestens ein Abschnitt des mindestens einen Saums (31) mindestens einen Abschnitt des Einlasshalses (14) überlappt, und
das Befestigen des oder jedes Saums (31) an dem Einlasshals (14).

2. Verfahren nach Anspruch 1, wobei der mindestens eine Saum (31) einen ringförmigen Saum (31) umfasst und der Spalt (33) eine ringförmige Aussparung (33) ist, die um den de Abschnitt (32) des röhrenförmigen Körpers (5) definiert ist.

3. Verfahren nach Anspruch 2, wobei das Befestigen des ringförmigen Saums (31) an dem Einlasshals (14) das Binden des Saums (31) an den Einlasshals (14) um den Umfang des Saums (31) umfasst.

4. Verfahren nach Anspruch 2 oder Anspruch 3, wobei das Befestigen des ringförmigen Saums (31) an dem Einlasshals (14) das Schweißen des Saums (31) an den Einlasshals um den Umfang des Saums (31) umfasst.

5. Verfahren nach einem der vorhergehenden Ansprüche, wobei das Befestigen des mindestens einen Saums (31) an dem Einlasshals (14) das Befestigen des oder jedes Saums (31) an den Einlasshals (14) unter Verwendung von Befestigungselementen, wie beispielsweise Nieten, Schrauben oder dergleichen, umfasst.

6. Verfahren nach Anspruch 3, das ferner den Schritt des Nietens des ringförmigen Saums (31) an den Einlasshals (14) anschließend an das Binden umfasst.

7. Verfahren nach einem der vorhergehenden Ansprüche, wobei ein ringförmiges Dichtungselement (37) um den Abschnitt (32) des röhrenförmigen Körpers (5) angeordnet ist, so dass der Tankeinlasshals (14) verschiebbar über dem Dichtungselement (37) aufgenommen wird, so dass das Dichtungselement (37) eine Fluiddichtung zwischen dem Einlasshals (14) und dem röhrenförmigen Körper (5) bereitstellt.

8. Fluidtank-Einlassbaugruppe, eingerichtet für das Anbringen an einem röhrenförmigen Hals (14) eines Fluidtankeinlasses (13), wobei die Einlassbaugruppe Folgendes umfasst:
einen im Allgemeinen röhrenförmigen Körper (5), der eine Einlassöffnung an einem ersten Ende aufweist und von einem Anbringungsmittel (2) abhängt, das an oder benachbart zu dem ersten Ende angeordnet ist,
eine oder mehrere Öffnungen (7; 20) entfernt von dem ersten Ende, um den Durchgang eines Fluids durch den röhrenförmigen Körper (5) in den Tank zu ermöglichen, und
Mittel (8), die innerhalb des röhrenförmigen Körpers (5) angeordnet sind, um den Durchgang einer Absaugröhre durch den röhrenförmigen Körper (5) zu sperren, wobei
das Anbringungsmittel (2) mindestens einen Saum (31) umfasst, der mit Abstand von einem Abschnitt (32) des röhrenförmigen Körpers (5) angeordnet ist, wobei ein Spalt (33) zwischen dem Abschnitt (32) des röhrenförmigen Körpers (5) und dem mindestens einen Saum (31) definiert wird, wobei der oder jeder Spalt (33) ein offenes Ende aufweist, um verschiebbar einen Abschnitt des Halses (14) eines Tankeinlasses aufzunehmen, wobei der oder jeder Spalt (33) eine radiale Breite und eine Länge, die sich von dem offenen Ende aus erstreckt, aufweist, um einen Halsabschnitt der gleichen Länge aufzunehmen,
**dadurch gekennzeichnet, dass** der Abschnitt des röhrenförmigen Körpers eine vergrößerte radiale Dicke in Bezug auf eine radiale Dicke von mindestens dem Großteil des von demselben abhängenden röhrenförmigen Körpers, und einen größeren Außendurchmesser als mindestens der Großteil des von demselben abhängenden röhrenförmigen Körpers, aufweist; und
der oder jeder Spalt (33) eine radiale Breite aufweist, die ausreicht, um eine Palette von Tankeinlasshälsen mit unterschiedlichen Durchmessern aufzunehmen.

9. Fluidtank-Einlassbaugruppe nach Anspruch 8, wobei der mindestens eine Saum (31) einen ringförmigen Saum (31) umfasst, der den Abschnitt des röhrenförmigen Körpers (5) umgibt, und der Spalt (33) eine ringförmige Aussparung (33) umfasst, die zwischen dem Abschnitt des röhrenförmigen Körpers (5) und dem ringförmigen Saum (31) definiert ist.

10. Fluidtank-Einlassbaugruppe nach Anspruch 9, wobei der ringförmige Saum von einem ringförmigen Flansch abhängt, der sich in Radialrichtung von dem röhrenförmigen Körper aus erstreckt, wobei eine Fläche des ringförmigen Flanschs ein Ende der ringförmigen Aussparung definiert, das dem offenen Ende gegenüberliegt.

11. Fluidtank-Einlassbaugruppe nach einem der Ansprüche 8 bis 10, die ferner ein ringförmiges Dichtungselement (37) umfasst, das um den Abschnitt (32) des röhrenförmigen Körpers (5) angeordnet ist derart, dass die Breite des oder jedes Spalts (33) zwischen dem mindestens einen Saum (31) und dem Dichtungselement (37) definiert wird.

12. Fluidtank-Einlassbaugruppe nach einem der Ansprüche 8 bis 11, wobei das erste Ende des röhrenförmigen Einlasses mit Kraftstoffdeckel-Eingriffsmitteln (35) versehen ist.

## Revendications

1. Procédé pour :
fixer un assemblage d'entrée anti-siphon (1) sur une entrée d'un réservoir de fluide (13), comportant un col à extension (14) ;
l'assemblage d'entrée comprenant un corps généralement tubulaire (5), comportant une ouverture d'entrée au niveau d'une première extrémité et dépendant d'un moyen de montage (2) agencé au niveau de ladite première extrémité ou en un point adjacent à celle-ci ;
une ou plusieurs ouvertures (7, 20), éloignées de ladite première extrémité, pour permettre le passage de fluide à travers le corps tubulaire (5) dans ledit réservoir ;
un moyen (8) agencé dans ledit corps tubulaire (5) pour bloquer le passage d'un tube-siphon à travers ledit corps tubulaire (5) ;
le moyen de montage (2) comprenant au moins une jupe (31), espacée d'une partie (32) de l'élément tubulaire (5), pour définir un espace (33) entre eux, ouvert pour recevoir le col (14) de l'entrée du réservoir ;
le procédé comprenant les étapes ci-dessous :
passage du corps tubulaire (5) dans ladite entrée du réservoir, de sorte que le col (14) de l'entrée du réservoir (13) est reçu de manière coulissante dans l'espace ou dans chaque espace (33), au moins une partie de ladite au moins une jupe (31) chevauchant ainsi au moins une partie du col de l'entrée (14) ; et
fixation de la jupe ou de chaque jupe (31) sur le col de l'entrée (14).

2. Procédé selon la revendication 1, dans lequel ladite au moins une jupe (31) comprend une jupe annulaire (31), ledit espace (33) étant un évidement annulaire (33) défini autour de ladite partie (32) du corps tubulaire (5).

3. Procédé selon la revendication 2, dans lequel l'étape de fixation de la jupe annulaire (31) sur le col de l'entrée (14) comprend l'étape de collage de la jupe (31) sur le col de l'entrée (14), autour de la circonférence de la jupe (31).

4. Procédé selon les revendications 2 ou 3, dans lequel l'étape de fixation de la jupe annulaire (31) sur le col de l'entrée (14) comprend l'étape de soudage de la jupe (31) sur le col de l'entrée, autour de la circonférence de la jupe (31).

5. Procédé selon l'une quelconque des revendications précédentes, dans lequel l'étape de fixation de ladite au moins une jupe (31) sur le col de l'entrée (14) comprend l'étape de fixation de la jupe ou de chaque jupe (31) sur le col de l'entrée (14) par l'intermédiaire d'éléments de fixation, par exemple de rivets, de vis ou similaires.

6. Procédé selon la revendication 3, comprenant en outre l'étape de rivetage de la jupe annulaire (31) sur le col de l'entrée (14) après ledit collage.

7. Procédé selon l'une quelconque des revendications précédentes, dans lequel un élément de joint d'étanchéité annulaire (37) est agencé autour de ladite partie (32) du corps tubulaire (5), de sorte que ledit col de l'entrée du réservoir (14) est reçu de manière coulissante au-dessus dudit élément de joint d'étanchéité (37), l'élément de joint d'étanchéité (37) établissant ainsi un joint étanche au fluide entre le col de l'entrée (14) et le corps tubulaire (5).

8. Assemblage d'entrée d'un réservoir de fluide adapté pour être fixé sur un col tubulaire (14) d'une entrée du réservoir de fluide (13), l'assemblage d'entrée comprenant :
un corps généralement tubulaire (5), comportant une ouverture d'entrée au niveau d'une première extrémité et dépendant d'un moyen de montage (2) agencé au niveau de ladite première extrémité ou en un point adjacent à celle-ci ;
une ou plusieurs ouvertures (7 ; 20), éloignées de ladite première extrémité, pour permettre le passage de fluide à travers ledit corps tubulaire (5) ; et
un moyen (8) agencé dans ledit corps tubulaire (5) pour bloquer le passage d'un tube-siphon à travers ledit corps tubulaire (5) ; dans lequel
le moyen de montage (2) comprend au moins une jupe (31), espacée d'une partie (32) dudit corps tubulaire (5), un espace (33) étant défini entre ladite partie (32) du corps tubulaire (5) et ladite au moins une jupe (31), l'espace ou chaque espace (33) comportant une extrémité ouverte pour recevoir de manière coulissante une partie du col (14) d'une entrée de réservoir, l'espace ou chaque espace (33) ayant une largeur radiale et une longueur s'étendant à partir de ladite extrémité ouverte pour recevoir une partie de col de la même longueur ;
**caractérisé en ce que** ladite partie du corps tubulaire a une épaisseur radiale élargie par rapport à une épaisseur radiale d'au moins la majorité du corps tubulaire dépendant de celle-ci et un diamètre extérieur supérieur à celui de la majeure partie du corps tubulaire dépendant de celle-ci ; et
l'espace ou chaque espace (33) ayant une largeur radiale suffisante pour recevoir une gamme de cols d'entrée de réservoir de diamètres différents.

9. Assemblage d'entrée d'un réservoir de fluide selon la revendication 8, dans lequel ladite au moins une jupe (31) comprend une jupe annulaire (31) entourant ladite partie du corps tubulaire (5), ledit espace (33) comprenant un évidement annulaire (33) défini entre ladite partie du corps tubulaire (5) et la jupe annulaire (31).

10. Assemblage d'entrée d'un réservoir de fluide selon la revendication 9, dans lequel la jupe annulaire dépend d'une bride annulaire s'étendant radialement à partir du corps tubulaire, une surface de la bride annulaire définissant une extrémité de l'évidement annulaire opposée à ladite extrémité ouverte.

11. Assemblage d'entrée d'un réservoir de fluide selon l'une quelconque des revendications 8 à 10, comprenant en outre un élément de joint d'étanchéité annulaire (37) agencé autour de ladite partie (32) du corps tubulaire (5), de sorte que la largeur de l'espace ou de chaque espace (33) est définie entre ladite au moins une jupe (31) et ledit élément de joint d'étanchéité (37).

12. Assemblage d'entrée d'un réservoir de fluide selon l'une quelconque des revendications 8 à 11, dans lequel ladite première extrémité de l'entrée tubulaire comporte un moyen d'engagement d'un bouchon de réservoir de carburant (35).
